# EUROPEAN PATENT SPECIFICATION

(11) **EP 0 967 819 B1**
(45) Date of publication and mention of the grant of the patent: **09.01.2008**
(21) Application number: 99111862.1
(22) Date of filing: 21.06.1999
(51) Int. Cl.: H04Q 7/36, H04Q 7/38

(54) **Method for handover in a cellular system**
Verfahren zum Weiterreichen in einem zellularen System
Procédé de transferts d'appels dans un réseau cellulaire

(30) Priority: 27.06.1998 GB 9813887
(43) Date of publication of application: 29.12.1999
(73) Proprietor: MOTOROLA LTD, Basingstoke, Hampshire RG22 4PD (GB)
(72) Inventor: Quirke, Thomas Michael, Swindon, Wiltshire, SN2 2UH (GB)
(74) Representative: Jepsen, René Pihl

(56) References cited:
- WO-A-98/25431
- DE-A- 4 225 582
- KERPEZ K J: "AUTOMATIC LINK TRANSFER WITH DISTIRBUTED ANTENNAS" PROCEEDINGS OF THE INTERNATIONAL CONFERENCE ON COMMUNICATIONS (ICC),US,NEW YORK, IEEE, 1995, pages 400-404, XP000533018 ISBN: 0-7803-2487-0
- SHAPIRO S: "METHOD FOR BEST BASE SELECTION IN A MICROCELL SYSTEM" MOTOROLA TECHNICAL DEVELOPMENTS, MOTOROLA INC., SCHAUMBURG, ILLINOIS, US, vol. 18, March 1993 (1993-03), pages 37-39, XP000349551

## Description

### Field of the Invention

The present invention relates to a cellular communication system such as the Global System for Mobile communications (GSM).

### Background of the Invention

In a cellular communication system such as the Global System for Mobile Communication (GSM), each of the mobile stations communicate with typically a fixed base station. Communication from the mobile station to the base station is known as uplink and communication from the base station to the mobile station is known as downlink. The total coverage area of the system is divided into a number of separate cells each covered by a single base station. The cells are typically geographically distinct with an overlapping coverage area with neighbouring cells. As a mobile station moves from the coverage area of one cell to the coverage area of another cell, the communication link will change from being between the mobile station and the base station of the first cell to being between the mobile station and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a mobile station is routed through the fixed network to the destination specific for this call. If the call is between two mobile stations of the same communication system the call will be routed through the fixed network to the base station of the cell in which the other mobile station currently is. A connection is thus established between the two serving cells through the fixed network. Alternatively, if the call is between a mobile station and a telephone connected to the Public Switched Telephone Network (PSTN) the call is routed from the serving base station to the interface between the cellular mobile communication system and the PSTN. It is then routed from the interface to the telephone by the PSTN.

As demand for mobile radio services increases, there is a requirement to provide ever greater capacity. One way to provide this extra capacity is to reduce cell size so that the available frequency band can be reused to a greater extent. However, increasing the number of cells makes frequency planning more complex and can impose other constraints on mobile stations as a result of their radio visibility from large numbers of cells and not just the nearest neighbours of their serving cell.

The use of a simulcast transmission of a control channel over a group of cells has been proposed to lessen the frequency planning problem.

A simulcast system is one in which a identical broadcast signal is transmitted on the same frequency in a plurality of cells. This signal contains control information and is used as a beacon by external networks to determine relative signal strength. The plurality of cells having identical broadcast signals will thus appear as the same larger cell. Additionally, in each cell within the simulcast system, a second Frequency carrier can be employed upon which traffic can be relayed. The second frequency is different from cell to cell although it may be reused if there is sufficient distance to mitigate interference. As a mobile station is likely to remain within this simulcast system during the period of the call and the simulcast carrier effectively creates a single larger umbrella cell, very few intercell handovers (between simulcast cells and external cells) will be required. Consequently, the majority of handovers will be of the intracellular (between the simulcast cells) type. Since there is a single umbrella cell identification the mobile cannot identify the smaller target cells beneath this umbrella cell: i.e. the handover process cannot be mobile-assisted. Rather than mobile stations identifying cells, the base stations in the cells identify the target mobiles by making measurements of the strength of neighbour uplink traffic. The stronger the neighbour measurement compared to measurements made by base stations in other cells the more probable that the observed mobile will handover into that cell.

An example of a simulcast system can be found in patent application GB-2308042, "Radio Communication System" by Motorola Limited and invented by Howard Peter Benn. Patent Cooperation Treaty patent application WO 98/25431 A describes controlling wireless communications in a multi-network communication system.

When many very small cells are employed in an area, a mobile station moving in or into this area will require the evaluation of handover to a large number of possible cells. This can be very time consuming, involves many measurements and much exchange of information between the mobile station and the network. For some cellular communication systems such as GSM there is a specific upper limit on the number of possible handover cells that can be considered at a time. Furthermore, if a region uses a simulcast technique the mobile station cannot differentiate between the individual cells based on the simulcast broadcast signal.

It is thus beneficial in a region of small cells to reduce the number of possible handovers that must be considered for a moving mobile station.

### Summary of the Invention

The invention seeks to provide a system for reducing the number of possible handovers that must be considered for a moving mobile station.

According to a first aspect of the invention there is provided a method of handover in a cellular communication system in accordance with claim 1.

Preferably the cellular communication system is a GSM system employing simulcast of a broadcast carrier within the region and the identical carrier frequency is allocated to traffic carriers.

According to a preferred feature of the invention, a serving cell is determined when the mobile station is supported by two or more of the plurality of cells and the mobile station is subsequently supported by the serving cell only. Preferably the serving cell is determined in response to a signal level, a signal to noise ratio or a bit error rate.

### Brief Description of the Drawings

An embodiment of the present invention is described below, by way of example only, with reference to the accompanying drawing, in which:
FIG. 1 is an illustration of a GSM cellular communication system according to prior art.
FIG. 2 is an illustration of a GSM cellular communication system according to the invention.

### Description of a Preferred Embodiment

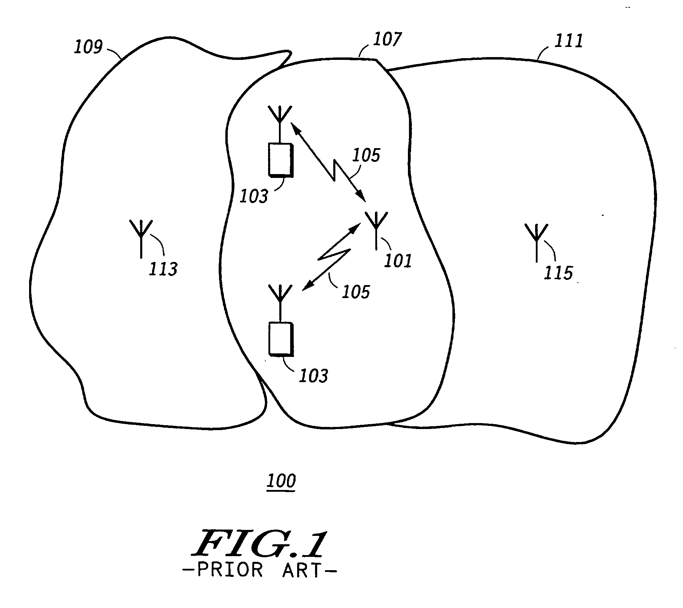

FIG. 1 illustrates a cellular communication system 100 according to prior art. The example illustrated corresponds to the GSM (Global System for Mobile communication) cellular system. In the system, a base station 101 communicates with a number of mobile stations 103 over radio channels 105. In the cellular system, the base station 101 covers users within a certain geographical area 107 whereas other geographical areas 109, 111 are covered by other base stations 113, 115. The individual areas covered by a base station are known as cells. Typically, each of the base stations 101, 113, 115 employ a broadcast carrier plus one or more traffic carriers.

The broadcast carrier contains cell identification, identification of neighbour cells, control signals, paging signals etc. In GSM the mobile stations continuously monitor the received signal levels of the broadcast signals of neighbouring cells and handovers are determined in response to these signal levels.

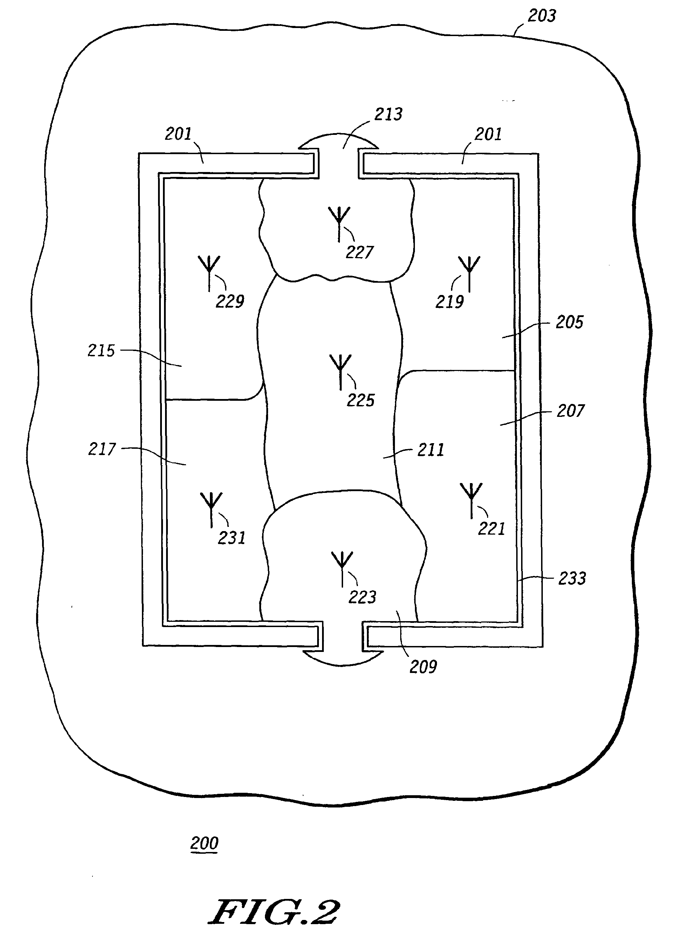

FIG. 2 shows a GSM cellular communication system with an in-building simulcast system. In the example, the outside of the building 201 is covered by a large cell 203 whereas the inside of the building is covered by a number of smaller cells 205 - 217 each served by an individual radio unit 219-231. In the example a simulcast technique is used for all in-building cells 205-217 in which radio units 219-231 transmit identical broadcast carriers. A mobile station thus cannot differentiate between the internal cells 205-217 and the internal cells will resemble a single large umbrella cell 233 to the mobile station. Each cell in addition to the broadcast carrier support traffic on a traffic carrier. In a conventional simulcast system according to prior art, the traffic carriers will have different frequencies between neighbouring cells.

A mobile station moving from the outside of the building to the inside of the building will need to handover from the outside cell 203 to one of the internal cells 205 - 217. Preferably it will handover directly to a traffic carrier to reduce the loading of the broadcast carrier. It will therefore need to determine which cell is the best serving cell. However, due to the simulcast technique the mobile station cannot differentiate between the internal cells 205 -227.

According to the invention, the entry cells 209, 213, being the cells covering the entry points to the building, are allocated the same frequency for the traffic carrier. A mobile station entering the building will measure a very high signal level of the umbrella cell 233 broadcast signal and a handover will be initiated. This handover will direct the mobile station to handover to the traffic carrier frequency of the entry cells. Both entry cells 209, 213 will be directed to support the call, i.e. the same resource will be allocated to the mobile station on both cells and both radio units 223, 227 will attempt communication with the mobile station.

Although the simulcast system prevents determination of the internal cell 205 - 217, the mobile will necessarily enter in one of the entry cells and by allocating these cells identical frequencies and supporting the call in both entry cells, the handover can be made directly to a traffic carrier.

According to one embodiment, the system will, subsequently to the handover to the entry cell, determine a single serving cell i.e. it will determine in which entry cell the mobile station is situated. This can be done by measuring the uplink signal independently in the two entry cells 209, 213 and as an example determine the serving cell as the cell receiving the highest signal level, the lowest bit error rate or the highest signal to noise ratio. In the extreme case where the entry cells are sufficiently separated the uplink signal from the mobile station will only be received at one of the cells and this will be the serving cell.

Following determination of the best serving cell the mobile station will only be supported by this cell and the resource allocated in the other entry cell is freed up and can be allocated to other calls.

Alternatively, the call can be supported by both entry cells until another serving cell is determined according to known simulcast handover techniques and the mobile station is handed over to this cell. Examples of simulcast handover techniques in a cellular system are described in earlier patent application GB-2308042, "Radio Communication System" by Motorola Limited and invented by Howard Peter Benn.

According to one example, the internal cells do not employ simulcast but are independent cells with different broadcast signals. In this example, the entry cells can be allocated identical carrier frequencies for the broadcast signal either as well as or instead of allocating identical frequencies to the traffic carriers. A mobile station in the external cell will measure the broadcast frequency of the entry cells and when entering the region (the building) it will detect a strong signal from the base station in the cell corresponding to the entry point. The mobile station will subsequently hand over to the broadcast carrier of the entry cell or alternatively it can hand over to any traffic carrier having identical frequencies in the entry cell. The mobile station will be supported by both entry cells regardless of which cell the mobile has entered. An advantage of this approach is that it is not necessary to determine which entry cell the mobile has entered but just that it has moved from the external cell to one of the internal cells. Thus mobile stations in the external cell 203 only need to evaluate one broadcast carrier for all internal cells as the broadcast carrier is the same for the entry cells and no differentiation between these is necessary. In a GSM system the specifications require that the cell identification etc. is the same for the broadcast signals of the entry signals and the embodiment in this case can be considered a form of simulcasting restricted to the entry cells.

While the above embodiments describe a system with two entry cells it will be apparent to the person skilled in the art how the invention can be applied for more entry cells. Preferably, the same carrier frequency will be allocated to all entry cells and all entry cells will support a mobile station entering the building.

It will also be apparent to the person skilled in the art that the invention is applicable but not limited to a GSM system.

## Claims

1. A method of handover in a cellular communication system, the method **characterised by** the steps of:
a plurality of cells (209, 213) covering entry points to an in-building region are allocated at least one identical carrier frequency, the plurality of cells (209, 213) transmitting an identical broadcast carrier,
a mobile station entering the in-building region is handed over to the at least one identical carrier frequency, and
subsequently supporting the mobile station by two or more of the plurality of cells (209, 213) covering entry points to the in-building region, wherein the same resource will be allocated to the mobile station on the two or more of the plurality of cells (209, 213) and two or more radio units (223, 227) of in-building cells will attempt communication with the mobile station.

2. A method as claimed in claim 1 wherein the covering step includes:
simulcasting of a broadcast carrier within the in-building region, and
allocating the identical carrier frequency to traffic carriers.

3. A method as claimed in any preceding claim wherein in the supporting step the mobile station is supported by all of the plurality of cells (209, 213) subsequent to the handover.

4. A method as claimed in any preceding claim further comprising the step of determining a serving cell when the mobile station is supported by two or more of the plurality of cells (209, 213) and the mobile station subsequently is supported by the serving cell only.

5. A method as claimed in claim 4 wherein the serving cell is one of the plurality of cells (209, 213).

6. A method as claimed in claim 4 or 5 wherein the step of determining the serving cell is in response to a parameter chosen from the group of:
a) a signal level
b) a signal to noise ratio
c) a bit error rate.

7. A method according to any previous claim wherein the communication system is a GSM system.

## Patentansprüche

1. Verfahren zur Weiterreichung in einem zellularen Kommunikationssystem, wobei das Verfahren durch die folgenden Schritte **gekennzeichnet** ist:
einer Mehrzahl von Zellen (209, 213), die Eingangspunkte zu einem in einem Gebäude liegenden Bereich versorgen, werden mindestens eine identische Trägerfrequenz zugeordnet, wobei die Mehrzahl von Zellen (209, 213) einen identischen Rundfunkträger übertragen,
eine Mobilstation, die in den in einem Gebäude liegenden Bereich eintritt, wird an die mindestens eine identisch Trägerfrequenz weitergereicht, und
nachfolgendes Unterstützen der Mobilstation durch zwei oder mehr der Mehrzahl von Zellen (209, 213), die Eingangspunkte zu dem in einem Gebäude liegenden Bereich versorgen, wobei der Mobilstation in den zwei oder mehr der Mehrzahl von Zellen (209, 213) dieselbe Ressource zugeordnet wird und zwei oder mehr Funkeinheiten (223, 227) von in einem Gebäude liegenden Zellen versuchen werden, mit der Mobilstation zu kommunizieren.

2. Verfahren gemäß Anspruch 1, wobei der Versorgungsschritt umfasst:
gleichzeitiges Übertragen eines Rundfunkträgers in dem in einem Gebäude liegenden Bereich und Zuordnen der identischen Trägerfrequenz zu Verkehrsträgern.

3. Verfahren gemäß einem der vorangehenden Ansprüche, wobei die Mobilstation in dem Unterstützungsschritt nach dem Handover durch alle der Mehrzahl von Zellen (209, 213) unterstützt wird.

4. Verfahren gemäß einem der vorangehenden Ansprüche, das weiterhin umfasst: den Schritt eines Bestimmens einer versorgenden Zelle, wenn die Mobilstation durch zwei oder mehr der Mehrzahl von Zellen (209, 213) und danach nur durch die versorgende Zelle unterstützt wird.

5. Verfahren gemäß Anspruch 4, wobei die versorgende Zelle eine der Mehrzahl von Zellen (209, 213) ist.

6. Verfahren gemäß Anspruch 4 oder 5, wobei der Schritt eines Bestimmens der versorgenden Zelle in Reaktion auf einen Parameter durchgeführt wird, der aus der folgenden Gruppe ausgewählt wird:
a) einem Signalpegel
b) einem Signal-Rausch-Verhältnis
c) einer Bitfehlerrate.

7. Verfahren gemäß einem der vorangehenden Ansprüche, wobei das Kommunikationssystem ein GSM-System ist.

## Revendications

1. Procédé de transfert dans un système de communication cellulaire, le procédé étant **caractérisé par** les étapes de :
une pluralité de cellules (209, 213) qui couvrent des points d'entrée sur une région à l'intérieur de bâtiments se voient allouer au moins une fréquence de porteuse identique, la pluralité de cellules (209, 213) émettant un signal de diffusion identique ;
une station mobile qui entre dans la région à l'intérieur de bâtiments est transférée sur l'au moins une fréquence de porteuse identique ; et
support ensuite de la station mobile par deux de la pluralité de cellules (209, 213) ou plus couvrant des points d'entrée sur la région à l'intérieur de bâtiments, dans lequel la même ressource sera allouée à la station mobile sur les deux de la pluralité de cellules ou plus (209, 213), et deux unités radio ou plus (223, 227) de cellules à l'intérieur de bâtiments tenteront une communication avec la station mobile.

2. Procédé selon la revendication 1, dans lequel l'étape de couverture inclut :
la diffusion simultanée d'une porteuse de diffusion à l'intérieur de la région à l'intérieur de bâtiments et l'allocation de la fréquence de porteuse identique à des porteuses de trafic.

3. Procédé selon l'une quelconque des revendications précédentes, dans lequel, au niveau de l'étape de support, la station mobile est supportée par la totalité de la pluralité de cellules (209, 213) suite au transfert.

4. Procédé selon l'une quelconque des revendications précédentes, comprenant en outre l'étape de détermination d'une cellule de desserte lorsque la station mobile est supportée par deux de la pluralité de cellules ou plus (209, 213) et que la station mobile est supportée ensuite par la cellule de desserte seulement.

5. Procédé selon la revendication 4, dans lequel la cellule de desserte est l'une de la pluralité de cellules (209, 213).

6. Procédé selon la revendication 4 ou 5, dans lequel l'étape de détermination de la cellule de desserte est en réponse à un paramètre choisi parmi le groupe comprenant:
a) un niveau de signal;
b) un rapport signal sur bruit;
c) un taux d'erreurs binaires.

7. Procédé selon l'une quelconque des revendications précédentes, dans lequel le système de communication est un système GSM.
